(19) Europäisches Patentamt
European Patent Office
Office européen des brevets

(11) EP 0 614 586 B1

(12) **EUROPEAN PATENT SPECIFICATION**

(45) Date of publication and mention
of the grant of the patent:
**19.02.1997 Bulletin 1997/08**

(21) Application number: **92923740.2**

(22) Date of filing: **19.11.1992**

(51) Int Cl.$^6$: **H04L 12/56**

(86) International application number:
**PCT/EP92/02652**

(87) International publication number:
**WO 93/11622 (10.06.1993 Gazette 1993/14)**

(54) **ARRANGEMENT OF A PLURALITY OF POLICING UNITS FOR THE POLICING OF CELL FLOW TRAFFIC PARAMETERS IN AN ATM SWITCHING NETWORK, AND RELATING METHOD**

ANORDNUNG EINER MEHRZAHL VON VERWALTUNGSEINHEITEN ZUR PARAMETERVERWALTUNG DES ZELLVERKEHRSFLUSSES IN EINEM ATM-VERMITTLUNGSNETZ UND VERFAHREN DAFÜR

DISPOSITIF COMPRENANT UNE PLURALITE D'UNITES DE COMMANDE DES PARAMETRES DE CIRCULATION DE CELLULES DE DONNEES UTILISE DANS UN RESEAU DE COMMUTATION EN MODE DE TRANSFERT ASYNCHRONE, ET PROCEDE ASSOCIE

(84) Designated Contracting States:
**BE CH DE ES FR GB GR IT LI NL SE**

(30) Priority: **28.11.1991 IT MI913191**

(43) Date of publication of application:
**14.09.1994 Bulletin 1994/37**

(73) Proprietor: **ITALTEL SOCIETA ITALIANA TELECOMUNICAZIONI s.p.a.**
**20149 Milano (IT)**

(72) Inventors:
• **BALBONI, Gianpaolo**
**I-10125 Torino (IT)**
• **COLLIVIGNARELLI, Marco**
**I-28040 Dormelletto (IT)**

• **CONIGLIARO, Salvatore**
**I-20025 Legnano (IT)**

(74) Representative: **Giustini, Delio**
**c/o Italtel Società Italiana**
**Telecomunicazioni s.p.a.**
**P.O. Box 10**
**20019 Settimo Milanese (MI) (IT)**

(56) References cited:
**EP-A- 0 416 685          EP-A- 0 472 408**

• **INTERNATIONAL JOURNAL OF DIGITAL AND ANALOG COMMUNICATION SYSTEMS vol. 3, 1990, NEW YORK, US pages 187 - 197, XP255806 G.NIESTEGGE 'THE LEAKY BUCKET POLICING METHOD IN THE ATM (ASYNCHRONOUS TRANSFER MODE) NETWORK'**

# Description

This invention relates to a telecommunication systems using a special numerical technique, called ATM (Asynchronous Transfer Mode), for the transmission and/or the switching communication of vocal and video signals and data.

The ATM technique is considered as the more profitable solution for the multiplexing and switching of the public communication networks towards the future Broad band Integrated Services Digital Network(B-ISDN).

In the ATM technique the information relating to the various users and services are organized as contiguous units having a fixed length of about 400 bits, called cells. The cell bits are subdivided into a field containing the information to be exchanged (payload) and into a heading field (header) containing the information necessary to route (to address)the cells through the switching network along with other service information.

The cells are received by line interfaces at the input of a switching node essentially consisting of a controlling part and a structure performing the switching of the cells.

During the call set up phase, a negotiation occurs between the user and the network operator, during which one or more traffic parameters of the connection (VC/VP or virtual channel/virtual path) are negotiated.

According to these parameters the network operator performs an allocation of the network resources to the call in question, so to guarantee the quality of service (QoS) contracted with the user. This latter, on his own behalf, undertakes to comply, for the duration of the call, the parameters negotiated in the call set up phase.

To protect the network from the possibility of any malfunctions whatsoever or from behaviours of the user not complying with what has been negotiated, at the input of the network a controlling of the usage parameters or UPC (Usage Parameter Control), called "policing", is carried on. This is performed by taking under control the above mentioned parameters for the whole duration of the call and by intervening discarding the cells in excess if it is necessary so to avoid congestion situations which shall result in the degradation of the network performances in terms of QoS offered to the users.

In order to eliminate the cells in excess according to criteria which take into account the traffic negotiated between the network operator and each user, a control method called "Leaky Bucket", has been proposed.

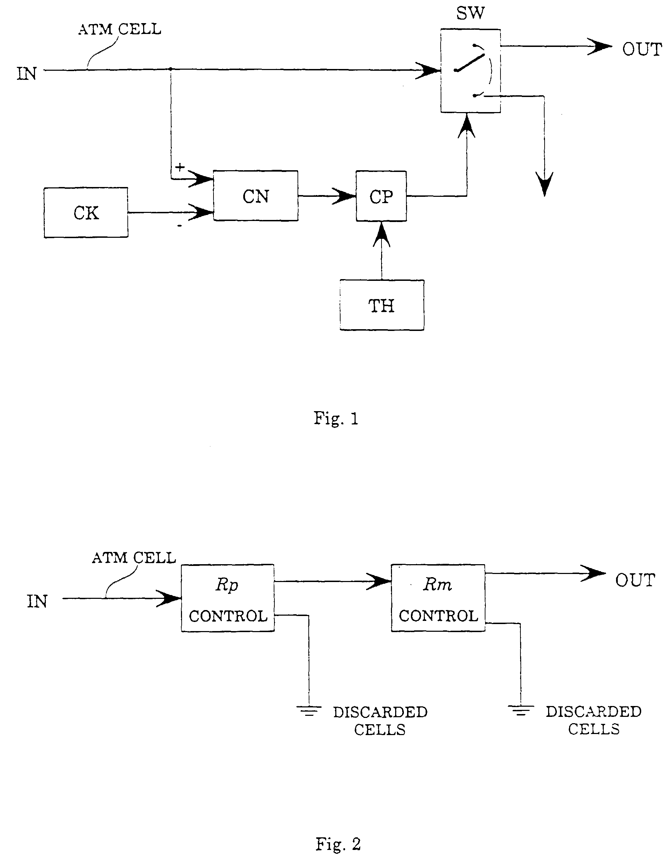

This method, specified in principle in Fig. 1, may be conceptually considered as consisting of a counter of the input cells (with a given header) which is increased at each cell input and decreased periodically by a clock signal.

The counter output is connected to a comparator that receives on the other input a reference threshold value, which may be modified, and supplies the output with a logic control signal to a switch SW.

As long as the value of the counter is lower than a given threshold value, the cells are accepted, that is, they are routed (addressed) to the network. When the content of the counter exceeds the threshold value, the cell is discarded since the user has sent a number of cells higher than the one agreed upon.

In Fig. 1, CN contains the filling value of the Leaky Bucket which is increased by 1 at each arrival of the cell pertaining to the VC/VP; CK is the block controlling the CN decrease at a frequency determined on the basis of the agreed parameters; TH is the threshold value, even this one, determined on the basis of the said parameters; CP is the comparator the output of which controls the switch SW. A policing or controlling unit based upon this principle is described as an instance in the patent application nr. PCT/EP92/01559 under the name of the same applicant with the title "Method and unit for the control of the cell flow in a telecommunication system according to the ATM technique " to which reference is made for further details. For what concerns the allocation of the network resources, a special attention has to be paid to the band (bit rate) required by the services using the network. From this point of view difference is made between constant bit rate services (CBR) and variable bit rate services (VBR).

CBR services may be fully identified by a single parameter, that is, the bit rate agreed for the service during the call set up phase and for this type of services, in order to guarantee that the cell flow does not exceed the agreed bit rate, it is sufficient to use only one policing unit in particular working according to the already mentioned principle of the Leaky Bucket (LB), in which the parameters (LB decrease frequency and threshold value, respectively) are defined on the basis of the agreed bit rate.

On the contrary, the VBR services are characterized by more than one traffic parameter so that it is necessary to contemporaneously perform the controlling or policing operation on more parameters of a same VC/VP, by using more policing units. In particular, the control of the following parameters has been proposed:

- peak bit rate (Rp), measured over a short period of time (Ts);
- mean bit rate (Rm), measured over a longer period of time (Tl).

Moreover, many VBR services may require a minimum guaranteed capacity, for instance in the case of vocal or video signals the intelligibility of which may be compromised unacceptably. Under network congestion, the network needs to know which cells can be discarded without violating the negotiated QoS.

Some VBR services will benefit (in terms of QoS) if the user, or the service provider, is allowed to select which cells, in the data flow, have the higher loss sensitivity. To these purposes, one of the ATM cell heading bits, indicated with CLP (cell loss priority), is used as an explicit priority indication. This bit may be placed at 1 by the user, or by the service provider, to indicate the low priority cells, then subjected to be discarded when the network is congested.

According to this convention, therefore, the cells having the CLP bit equal to 0 have then the highest priority because in the network the capacity they required has been allocated in a deterministic way.

The above specified mechanism of the loss priority is not used for the CBR services, for those all the cells have then CLP=0.

Since to the high priority cell flow the network resources necessary to guarantee the negotiated QoS are reserved in a deterministic way, their bit rate has to be negotiated during the call set up and has to be kept under control by the network, in order to protect the QoS of other users. Therefore, the network will monitor the negotiated rate of higher priority cells and cells arriving at the network in excess of this rate will be discarded (or their priority may be decreased, by setting at 1 the CLP bit) .

More generally, for a VBR link, may be contracted two values for each traffic parameter, one for the high priority flow and one for the low priority one.

Then, in the case of VBR services it is necessary to use, for each parameter to be controlled, a Leaky Bucket (LB) unit, because each parameter of the (VC/VP) requires a decreasing frequency and a threshold value dedicated to it and consequently a value of its own, the LB filling level.

In particular, it may be necessary to use up to four units at the same time, to control the Rp and the Rm of the high priority flow, (Rp0 and Rm0, respectively) and the Rp and the Rm of the low priority flow (Rp1 and Rm1, respectively).

However, the decision about the compliance of the behaviour of the user with what has been negotiated and the corresponding action on the cell (discarding of the cell or lowering of the priority) are defined by evaluating the indications given by all the Leaky Bucket devices.

In the literature many utilization schemes of more than one unit for the control of the traffic parameters of a same connection have been proposed; however, the most reliable of them foresee the application in series of the policing algorithms to the cell flow, as schematically shown in Fig. 2 showing two policing units connected with one another in series.

Nevertheless, the activation in series of more than one policing unit may be a problem, because the global response time is given by the sum of the response times of the single units. This activating procedure of the policing units represents a significant disadvantage considering the short time in which it is necessary, or anyhow useful, to have the global response at one's disposal and the more this is true, the greater is the number of the units which should operate in series.

EP-A-0 416 685 discloses a method and a system including at last two parallely operated policing units each having an output connected to a combinatorial network generating a final control signal.

Therefore, it is one of the purposes of this invention to realize an arrangement of the above indicated type which overcomes the difficulties of both the activations:

- in series (see fig. 2), or
- in parallel (see EP-A-0 416 685),

of the policing units.

The invention relates to an arrangement of a plurality of policing units for the policing of the traffic parameters of the Asynchronous Transfer Mode (ATM) connections cell flow according to the so called "Leaky Bucket" principle and particularly in a telecommunication apparatus including a header processing unit and several controlling or policing units, said arrangement including
at least a first and a second simultaneously operating policing units able to monitor the peak bit rate and the mean bit rate, respectively, an output of each of said policing units being connected to a combinatorial network generating a control signal of the cell flow traffic,

characterized in that each of said policing units has activation input connected to the said header processing unit and two output lines both connected to said combinatorial network, the output lines of the first policing unit being further connected to a same number of inputs of said second policing unit,

and in that said combinatorial network has two output lines connected to the said header processing unit, one of such lines carrying a signal that is representative of a detection of a violation by at least one of said policing units while the other of such lines carries a validating signal.

Moreover, the invention relates to a method for the policing of the traffic parameters of the cell flow of the connection active at the same time on an Asynchronous Transfer Mode (ATM) link according to the so called "Leaky Bucket" principle in an exchange termination) including

a header processing unit
and at least two units for the policing of the respect of the predetermined values of the said parameters, each of said policing unit including a counter for each flow to be controlled,
said method enabling at the same time said policing units in order to analyze at least one traffic parameter of the ATM cell flow, and generating a control signal in response to assessment signals generated by said policing units upon receiving said cell flow;

characterized in that the method further comprises the steps of:

- generating, for each of the said policing units, a compliance signal as a combination of the outputs of the said policing units and in case of a cell field which identifies the cell priority, the said compliance signal being active in presence of the violation of at least one fixed traffic parameter;

-   updating the content of the said counter of each policing unit at the moment of the next analysis relating to a cell pertaining to the same connection without increasing the value of the same counter, if the said compliance signal has been found to be active for the policing unitin question.

Additional advantageous characteristics will result by the depending claims.

The invention allows to overcome the difficulties of the known device with a sort of series interconnection of the policing units, i.e. a parallel activation emulating the connection in series of the policing units.

The invention will be described with reference to preferred but not limiting executive forms, shown with the aid of the enclosed figures, in which:

Fig. 1, already discussed, shows schematically the operation principle called Leaky Bucket;

Fig. 2, shows schematically a principle configuration known in itself with Leaky Bucket units connected in series;

Figs. 3 and 4, show principle diagrams of arrangements adapt to allow the policing of the higher priority cells as well as the lower priority ones;

Fig. 5, shows a first executive form of the invention corresponding to the principle diagram of Fig. 2;

Fig. 6a, is a timing diagram relating to the diagram of Fig. 5;

Fig. 6b, shows in detail the combinatorial network RC of Fig. 5;

Fig. 7, shows a second executive form of the invention, corresponding to the principle diagram of Fig. 3;

Fig. 8, shows a third executive form of the invention, corresponding to the principle diagram of Fig. 4; and

Fig. 9, shows in detail the combinatorial network RC2 of Fig. 8;

Fig. 10, is an explanatory block diagram useful to illustrate the method for the policing of the traffic parameters according to this invention.

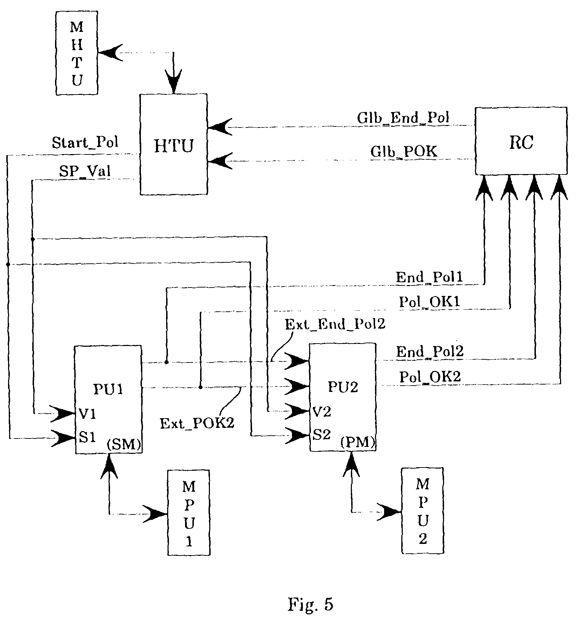

A first executive form of the invention, fit to control the Rp and Rm parameters, is shown in Fig. 5, which shows only the header processing and translation unit HTU and the associated memory MHTU being part of a generical exchange termination (ET) of a switching node.

The policing units used are basically some Leaky Bucket devices with two pairs of activation inputs and a pair of outputs. The unit may be pre-set to operate separately or in single mode (SM) in which case it is activated only a pair of inputs, or in association with other units (parallel mode or PM) and in this case also the second pair of inputs may be activated (by the outputs of one or more of the associated units), with the outputs depending on the two pairs of inputs.

The arrangement includes two policing units indicated with PU1 and PU2 controlling the peak bit rate (Rp and the mean one Rm, respectively both of them having the activation inputs S1, V1, S2, V2 connected in parallel to the header processing and translation unit HTU from which they receive the Start-Pol and SP-Val signals. To each PU1 and PU2 unit also a memory indicated with MP1 and MP2, respectively, and containing the current parameters for the running of the "Leaky Bucket" policing method is associated.

PU1 unit controlling Rp is programmed to operate in Single Mode (SM), in that it does not take into account the indication supplied by the PU controlling the Rm.

On the contrary, the latter is programmed to operate in parallel Mode (PM), in order to take into account the indication supplied by the PU controlling the Rp.

The PU unit, contrary to what shown in the diagram of Fig. 2 are activated at the same time and then they found themselves to operate in parallel in order to meet the requirement relating to the response time at the HTU, which foresees that the global indication of acceptability of the cell reached the HTU within a time shorter than the duration of the ATM cell (i.e. 2,73 microseconds for a 155.520 Mbit/s link).

In this way, each PU unit has at its disposal a time equal to the duration of the ATM cell, apart from the presence of other PUs or similar units, controlling other parameters of the same link.

As it will be hereunder shown in detail this is possible because the single PU units are designed to operate in Single Mode (SM) or in Parallel Mode (PM), for being activated and to operate at the same time, even by implementing any possible configuration of more Leaky Bucket type devices, including the serial and parallel ones, provided that the PUs are properly connected each other and these are properly connected to the HTU, by means of elementary logic gates external to the components.

The two outputs of both PU1 and PU2 units, indicated with End-Pol1, Pol-OK1 and End-Pol2 Pol-OK2 signals, respectively, are connected to the inputs of a combinatorial network RC producing two output signals included in the 4-phases handshake protocol to the HTU. More precisely, G1b-POK is the global signal indicating whether a violation has been detected by at least one of the PU units while G1b-End-Pol is the global signal validating G1b-POK. If the HTU finds G1b-POK=0, in correspondence to the rising edge of G1b-End-Pol, the cell is discarded.

The principle diagram of the arrangement may be represented by the series configuration shown in Fig. 2, by means two Leaky Bucket type devices indicated with Rp CONTROL and Rm CONTROL.

Pol-OK1 and End-Pol output signals from unit PU1, besides towards the combinatorial network RC, are send at PU2, so that it may take into account the operation of the violations detected by PU1.

G1b-POK is obtained as a logic product (AND) of the Pol-OK1 a Pol-OK2, coming from PU1 and PU2.

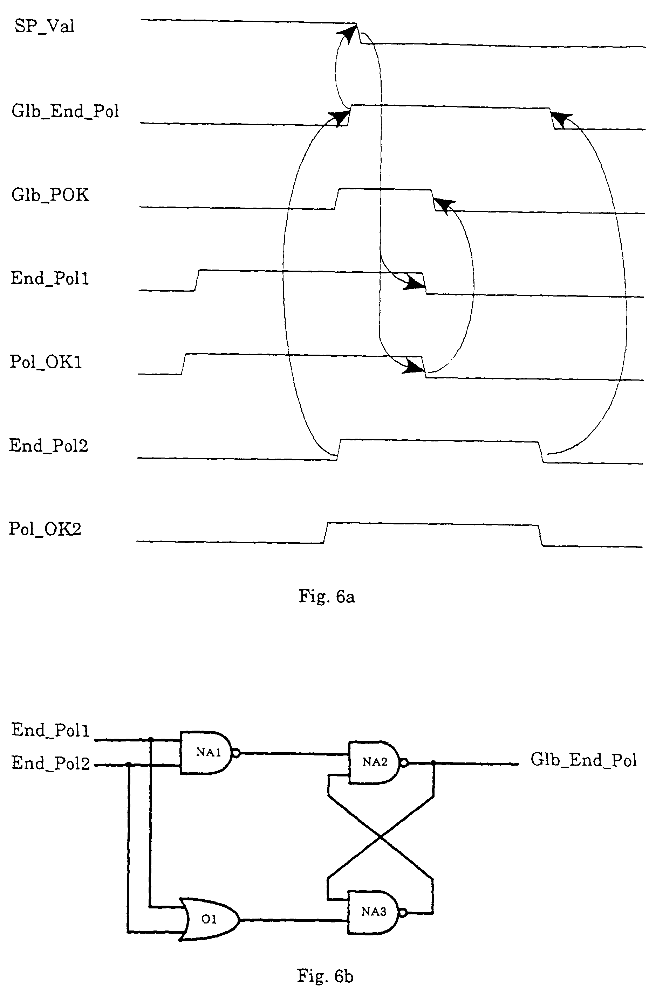

G1b-End-Pol is obtained in a more complex way; it has to go to 1 in correspondence with the End-Pol signal which rises last (End-Pol2 in the case shown in Fig. 6a), and it must come back to 0 in correspondence with the End-Pol signal which falls last. This behaviour of G1b-End-Pol is not connected to the handshake implementation protocol towards the HTU, but it is necessary for the proper operation of the PU or, more generally, of the PUs operating in Parallel Mode. In Fig. 6b is shown an executive example of the combinatorial circuit supplying the G1b-End-Pol with the above mentioned progress, starting from End-Pol1 and End-Pol2. This circuit includes three NAND A1, A2, A3 and one OR O1 gates.

With this arrangement in which the unit responsible for the control of the Peak bit rate Rp precedes the one controlling the mean bit rate Rm, the possibility that the user may suffer beyond measure the discarding of a cell for its having violated the negotiated Rp is avoided, in that the unit controlling the Rm is not increased, even it operates contemporaneously to the one controlling Rp.

In the case in which, the cell is discarded for having violated the negotiated Rm, the unit relating to Rp is anyhow increased, since a feedback for the downstream unit has not been foreseen. Nevertheless, in practice, this is not a problem, in that the requirements relating to the respect of Rp are much more limiting than the ones relating to Rm.

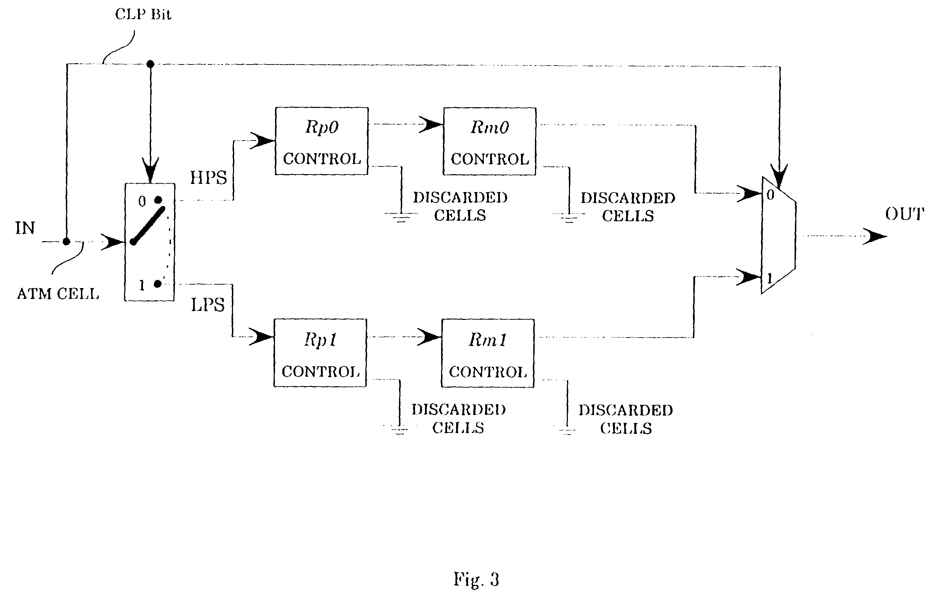

The total flow of the cells pertaining to variable bit rate VC/VP may be seen subdivided into two sub-flows, consisting of higher priority cells (CLP=0) and of the lower priority ones (CLP=1), respectively, pertaining to the same VC/VP. The policing operation on such connections may require that the traffic parameters control is performed separately on the two sub-flows, for which then, traffic parameters differing from one another may be contracted. Fig. 3 shows a principle diagram allowing to obtain this.

As you can see, the higher priority cells sub-flow (HPS) and the lower priority one (LPS) reach units separate for what concerns the Rp as well Rm control, indicated with Rp0 CONTROL and Rm0 CONTROL for the control of the higher priority sub-flow and Rp1 CONTROL and Rm1 CONTROL for the control of the lower priority sub- flow, respectively. When one of these units detects a cell not respecting the contracted parameters, that cell is discarded.

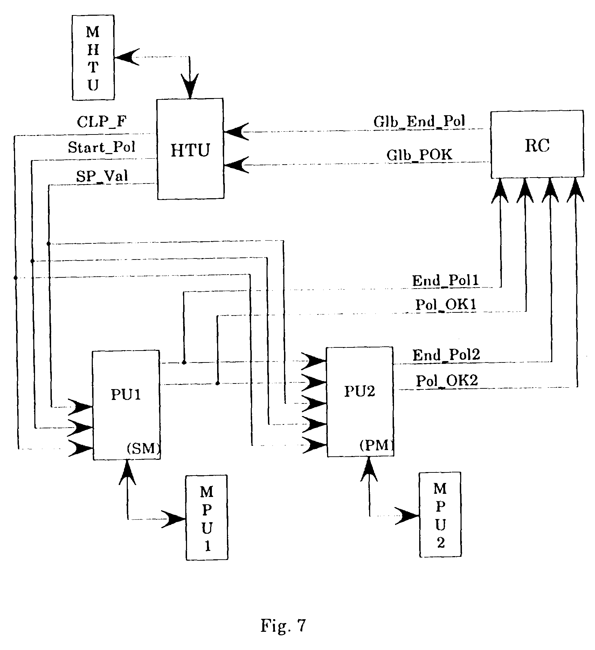

Fig. 7 shows the executive form according the invention of the principle diagram illustrated in Fig. 3 and able to perform the policing of the four parameters Rp0 CONTROL, Rm0 CONTROL, Rp1 CONTROL and Rm1 CONTROL, discarding the cell violating one. of these parameters on the DISCARDED CELLS outputs. According to this executive form only two PU policing units are used, instead of the four shown in Fig. 3, thanks to the fact that, at most a cell must overcome the policing action of only two PU units.

In particular, PU1 unit controls separately the peak bit rate Rp of the higher priority sub-flow (Rp0) as well as the lower priority one (Rp1), and PU2 controls the respective mean bit rates (Rm0 and Rm1). Even in this case, the two units (PU1 and PU2) controlling Rp and Rm are activated at the same time by HTU, by means of the Start-Pol and SP-Val signals every time that a cell arrives, and this happens irrespectively of its priority. Furthermore, this arrangement foresees that HTU supply PU1 and PU2 units with the indication relating to the priority of the cell under examination; this may be obtained by making available for those units the CLP value contained in the ATM cell header, indicated in the figure with CLP-F. This value is used by the two PU1 and PU2 units, in addition to the connection identifier to which the cell pertains (not shown in the figure), to address the parameters necessary for the performance of the algorithm, so that CLP-F is made available in correspondence with the value of such identifier.

In the configuration of Fig. 7, similarly to what shown in Fig. 5, the Rp policing unit is programmed to operate in Single Mode (SM), while the Rm policing unit is programmed to operate in Parallel Mode (PM).

Also in this case, G1b-POK is the global signal indicating whether a violation has been detected at least by one PU, while G1b-End-Pol is the global signal validating G1b-POK. Both these signals come from the RC combinatorial network and are part of a 4-phases handshake protocol towards HTU. G1b-POK is obtained as a logic product (AND) of the Pol-OK1 and Pol-OK2 signals, coming from PU1 and PU2. G1b-End-Pol has the shape shown in Fig. 6a, obtained starting from End-Pol1 and End-Pol2, as said before.

Also in this case, if the HTU finds G1b-POK=0, in correspondence with the G1b-End-Pol rising edge, the cell is discarded.

The Pol-OK1 and Pol-OK2 signals coming from PU1, are sent to the combinatorial network RC as well as towards PU2 input, so that, in its operation, it may take into account the violations detected by PU1.

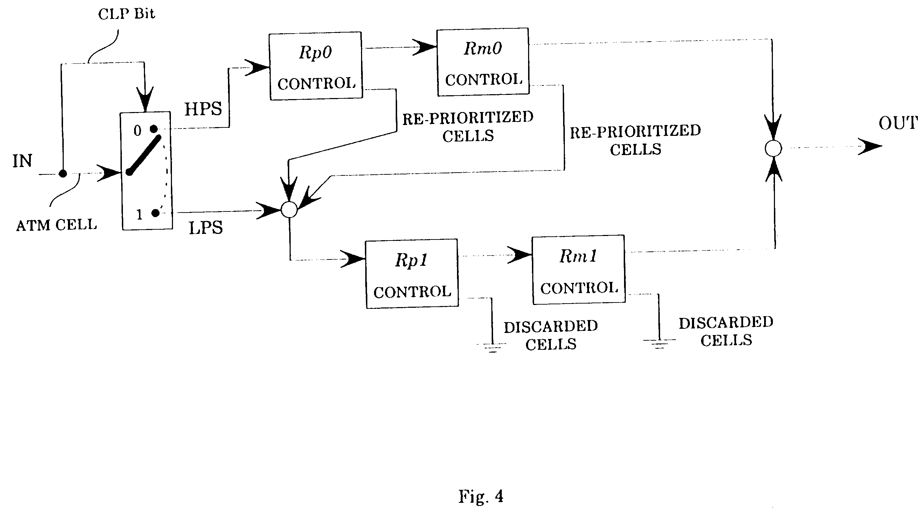

In the case in which the policing policy of cells having a different priority foresees not to discard in advance the cells pertaining to the higher priority sub-flow violating one of the contracted (Rp0, Rm0) parameters, the principle diagram of Fig. 4 is applied. In this case, unlike the preceding case, if the Rp0 CONTROL and Rm0 CONTROL units detect a violation, the priority of the cell is decreased, that is, in the cell header is set CLP=1 and the cell is subjected to the verification of PU units controlling the lower priority sub-flow (Rp1 CONTROL and Rm1 CONTROL). Then, the cells pertaining to the sub-flow reaching these units are the ones initially selected as lower priority cells (CLP=1) as well as the originally higher priority ones (CLP=0) the priority of which, following the detection of a violation by Rp0 CONTROL and/ or Rm0 CONTROL, has been decreased. If a violation by a lower priority cell (by Rp1 CONTROL and/or Rm1 CONTROL) is detected, the cell is discarded.

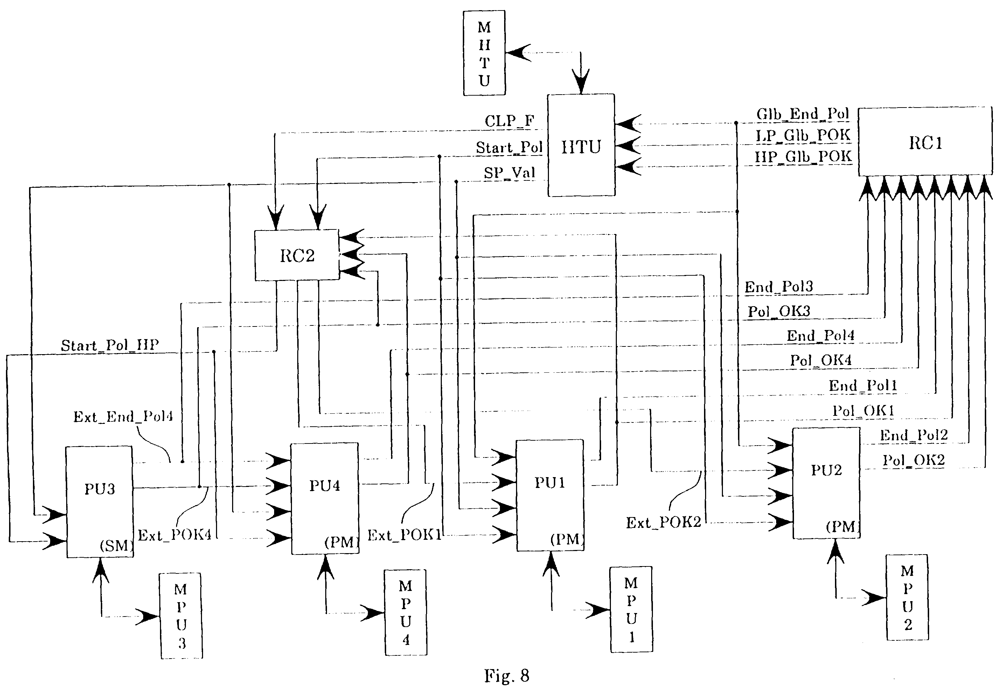

Fig. 8, shows a realization form according to the invention of the principle diagram illustrated in Fig. 4 performing the above described function and this allows to control the Rp and Rm parameters of the high priority sub-flows (Rp0 CONTROL and Rm0 CONTROL units) and of the low priority sub-flows (Rp1 CONTROL and Rm1 CONTROL units) and to perform a decreasing of the priority of those higher priority cells which violate the parameter contracted for that sub-flow through an issuing on RE-PRIORITIZED CELLS output.

In this arrangement four units, that is, PU1, PU2, PU3, PU4 and a slightly different circuit configuration are actually foreseen. Nevertheless, for the same or similar components, the same references will be used, and in particular the combinatorial network is generally hereinafter referred to as RC, even if it is shown in Fig. 8 in the form of two separate blocks, RC1 and Rc2.

In this case, if the cell is a lower priority cell (CLP=0) the HTU activates at the same time only the two PU1 and PU2 units, by means of the Start-Pol and SP-Val signals. On the contrary, if the cell is a higher priority cell (CLP=0), in the same time of PU1 and PU2, also PU3 and PU4 units are activated by the HTU.

The two units, PU1 and PU2, are activated by HTU whenever a cell arrives, irrespectively of its priority, so to minimize the response time to HTU, in the case in which the cell in question is originally a high priority cell but it has to be subjected to verification by PU1 and PU2 following to a violation detected by PU3 and/or PU4.

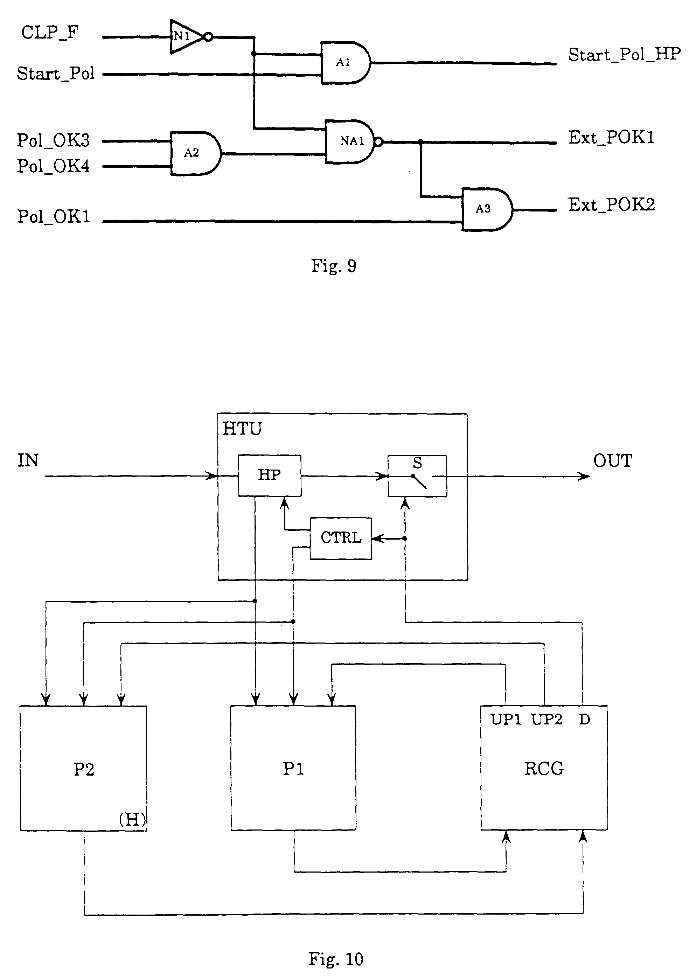

The differentiation in activating the units as a function of CLP bit is obtained by making available outside the HTU the CLP field value, contained in the ATM cell header, indicated with CLP-F in the figure. In this case, that value is made available at the same time of the Start-Pol signal, so that CLP=1 may hide to the PUs in question (PU3 and PU4), the activation of the other PUs. PU3 and PU4 activation signal, indicated in Fig. 8 with Start-Pol-HP, is obtained as an AND logic product through the A1 gate between the NOT value (NOT) of CLP-F as shown in Fig. 9; also in this case, that signal is validated by Sp-Val coming from the HTU. Unlike the preceding case, the HTU shall be able to differentiate between the violation detected by the PUs controlling the high priority flow (PU3 and PU4) and the violation of one of the other PUs. In fact, the violation relating to Rp0 and to Rm0 implies, in itself, the mere modification of the CLP bit from 0 to 1, and not the discarding of the cell, that is instead foreseen according to the indication of a violation coming from the other PUs (PU1 and PU2). For this reason, the compliance indication for the higher priority flow is sent to an HTU input dedicated to it indicated in the figure with HP-G1b-POK. The compliance indication relating to the other PUs (PU1 and PU2) is supplied to the HTU through the LP-G1b-POK signal.

In the connecting diagram shown in Fig. 8, PU3 controls Rp0 and PU4 controls Rm0, while PU1 and PU2 control Rp1 and Rm1, respectively. PU4, PU2 and PU1 are programmed to operate in Parallel Mode (PM), while PU3 is programmed to operate in Single Mode (SM). In this case, LP-G1b-POK is the signal indicating whether by PU1 or PU2 a violation has been detected, HP-G1b-POK is the signal indicating whether by PU3 or PU4 a violation has been detected and G1b-End-Pol is the signal that validates both of them.

LP-G1b-POK is obtained as a logic product (AND) of Pol-OK1 and Pol-OK2 signals, coming from PU1 and PU2.

HP-G1b-POK is obtained as a logic product (AND) of Pol-OK3 and Pol-OK4 signals, coming from PU3 and PU4.

G1b-End-Pol has the progress already specified and it is obtained starting from End-Pol1, End-Pol2, End-Pol3 and End-Pol4.

The action undertaken by the HTU on the cell depends on the value of LP-G1b-POK, HP-G1b-POK and CLP of the cell under examination, according to what hereunder indicated:

- if the cell has CLP=0 and HP-G1b-POK=1, the cell is accepted irrespectively of the value of LP-G1b-POK;
- if the cell has CLP=0 and HP-G1b-POk=0, the cell is accepted if the result is LP-G1b-POK=1 but its priority is lowered by setting the CLP field to 1, while if the result is LP-G1b-POK=0, the cell is discarded;
- on the contrary, if the cell has CLP=1 and LP-G1b-POK=1, the cell is accepted irrespectively of the value of HP-G1b-POK; finally,
- if the cell has CLP=1 and LP-G1b-POK=0, the cell is discarded irrespectively of the value of HP-G1b-POK.

As it has been said before, the two units PU1 and PU2 are activated by the HTU irrespectively of the priority of the cell. Then, if this cell is a higher priority cell and the units PU3 and PU4 do not detect any violation, the units PU1 and PU2 may have updated the respective values of the Leaky Bucket relating to the lower priority sub-flow, since activated at the same time by PU3 and PU4, in spite of the fact that the cell should not really be subjected to their control. According to the invention, in order to take into account this fact, to PU1 and PU2 units is indicated if the cell under examination is a higher priority cell and if it has not been detected any violation. Further, according to what has been said before about the diagrams relating to the Figs 5 and 7, to PU2 unit is also indicated if any violation has been detected by the PU1 unit.

According to this indication, the PUs take into account the performed increase of the leaky bucket value, due to a cell out of its competence. Instead of foreseeing a feedback in the same cycle oriented to decrease the leaky bucket value in order to return to the correct situation, this action is postponed to the next updating of the same leaky bucket value following to the arrival of a new cell pertaining to the same VC/VP. In this way, the execution time of more than one unit in parallel is not extended in respect to the operation of a single unit.

With reference to the Fig. 8, to Ext-POK1 input of the unit PU1 is sent the signal (HP-G1b-POK), obtained as a logic (AND) product of Pol-OK3 and Pol-OK4 through the gate AND A2 and masked, by means the gate NAND NA1, by the CLP-F NOT value (NOT) by the gate N1, as indicated in Fig. 9; to Ext-POK2 input of PU2 unit is sent the logic product (AND) of the same signal present at Ext-POK1 input with Pol-OK1 signal coming from PU1, by using the gate AND A3. In this way, the unit PU1 finds Ext-POK1=0 when the cell under examination is a higher priority cell (CLP-F=0) and no violation (HP-G1b-POK=1) has been detected by PU3 and/or PU4, while in any other case it finds Ext-POK1=1, and therefore it may take into account this fact in the next executions of the algorithm on the flow pertaining to the same VC/VP.

The PU2 unit finds Ext-POK2=0 when the result is Ext-POK1=0, this fact occurring when the cell under examination is a higher priority cell (CLP-F=0) and no violation (HP-G1b-POK=1) has been detected, since also for PU2 what has been said before for PU1, is applied. Further, as already said, the PU2 unit is informed also about the violations detected by PU1; then, it finds Ext-POK2=0 if the result is Pol-OK1=0, because the cell in question has violated the parameter controlled by PU1 (that is, Rp1). If, at the same time, the result is Ext-POK1=1, this means that the cell has been subjected regularly to the control of PU2, but it has been discarded for the violation detected by PU1. In fact, Ext-POK1 is equal to 1 when the cell under examination is a lower priority cell (CLP-F=1) or when a violation relating to the higher priority sub-flow (CLP-F=0 and HP-G1b-POK=0) has been detected, so that the priority of the cell has been decreased.

Finally, always with reference to Fig. 8, you may note that Pol-OK3 and End-Pol3 signals, coming from PU3, are sent to the combinatorial network RC as well as to the PU4 input, so that this latter, in its operation, may take into account the violations of Rp0 detected by PU3.

Now, the operating modes of the units in Single Mode and in Parallel Mode will be described more in detail.

In Single Mode (SM), whenever PU unit is activated by the HTU to perform the cell policing, it applies the following formula:

$$VLB = VLB + INC - (CLK - LST) \cdot DEC \qquad (1)$$

where the variables have the following meanings:

VLB is the filling value of the Leaky Bucket associate with the particular VC/VP;

INC is the value with which the current VLB value is increased at the arrival of a cell pertaining to the VC/VP;

DEC is the value for which VLB has to be decreased at each cell time;

CLK is the value of the absolute time;

LST is the time value of the last updating of the VLB value pertaining to the VC/VP, and therefore it is set equal to CLK when the algorithm is applied to the cell with positive result.

If, by applying the preceding formula, a negative VLB value results, this is set equal to zero.

VLB is limited also by a threshold value S; if after the updating VLB is greater than S, the unit signals a violation and does not update the variables VLB and LST in the MPU.

Since PU controls all the VC/VP which are active at the same time on the 155.520 Mbit/s link, each VC/VP has its own set of VLB, INC/DEC and LST variables and the PU applies the preceding formula by using the variables relating to the VC/VP to which pertains the cell on which the policing is carried on.

In order to perform the updating of the value of the LB relating to the VC/VP only in correspondence with the arrival of a cell pertaining to that VC/VP, the CLK (global) and LST (relating to each VC/VP) variables are used.

In the case of VC/VP pertaining to irregular narrow band calls, it may happen that no cell arrives for a period long enough to allow the global time counter (CLK) to carry on a complete n-module counting, where with n the counter bit is indicated, that is, the bit number on which CLK variable is reported. The happening of such a situation leads to wrong evaluations of the time elapsed between the arrival of one cell and the next one and determines the unjustified discarding of some cells.

In order to correctly deal with this kind of services too, irrespectively of the maximum distance between the arrivals of the cells pertaining to them, the PU performs a cyclical updating of the VLB and LST variables of each VC/VP, called "refresh", so to take into account the time elapsed by the last updating, whether it is due to the arrival of a VC/VP cell or to a refresh operation. The updating of the LB value is performed by applying the following formula:

$$VLB = VLB - (CLK - LST) \cdot DEC \qquad (2)$$

To each cell time, in correspondence with the CLK increase, the VLB and LST variables of VC/VP are updated and cyclically the refresh operation is performed on all the VLB and LST variables present in the MPU memory.

The dimensions of CLK and LST limit the maximum number of VC/VPs which may be controlled at the same time by the PU. If you indicate with n the size (the bit number) of such variables, the result is, in fact, that a complete updating of the VLB and LST variables of all the VC/VPs has to be carried on within 2n cell times or CLK increases, so that at most the PU may manage 2n-1 VC/VPs active at the same time on the 155.520 Mbit/s link.

In the Parallel Mode (PM) operation, the PU applies the algorithm by using an additional variable, called VD, which records when a violation is detected by at least one of the other PUs and not by it.

This indication is sent to the PU by using the Ext-POK and Ext-End-Pol inputs. To the Ext-POK input is supplied an information relating to violations detected by other PUs, while to the Ext-End-Pol is supplied the signal which validates this information, in practice the G1b-End-Pol signal, the shape of which is shown in Fig. 6a.

In this way, by the PUs operating in Parallel Mode, the same 4-phases handshake protocol implemented between PU and HTU is used.

The PU evaluates Ext-POK only if it has not detected any violation, that is, only when it supplies the output Pol-OK=1. In this case, if the PU finds Ext-POK=0 in correspondence with the Ext-End-Pol rising edge, it stores VD=1 in the MPU status field, at the address relating to the VC/VP to which the cell under examination pertains, otherwise, it stores VD=0. Therefore:

if Pol-OK1 = 1 and Ext-POK = 1, the result is VD = 0;
if Pol-OK1 = 1 and Ext-POK = 0, the result is VD = 1;
if Pol-OK1 = 0 ExtPOK is not taken into consideration and VD is not modified.

Whenever the PU is activated by the HTU to perform the policing on a cell (Start-Pol=1 in correspondence with the SP-Val rising edge) it updates the LB value (VLB) as a function of the VD value that has been stored in the MPU memory, as follows:

1. with VD=0, the PU applies the formula 1, as in the Single Mode (SM) operation;
2. with VD=1, the PU updates VLB without increasing its value of the INC quantity, since it has already performed this increase in correspondence with the arrival of the preceding cell of the same VC/VP, which has been discarded by the HTU following the detection of a violation by one or more PUs, except for this PU. Then, formula 2 is applied, so we may speak of "refresh like" algorithm.

The refresh operation is not influenced by the Single/Parallel Mode operation, so it is performed as previously indicated even in Parallel Mode.

For what concerns the use of the arrangements according to the invention in the case of VC/VP relating to CBR services, these may be completely identified by only one parameter, so that it is sufficient to use only one PU unit in order to carry on the policing of all the VC/VPs, relating to CBR services, being present at the same time on the 155.520 Mbit/s link. The unit is used in Single Mode since, during its operation, it has not to take into account other PUs present in the ET, if any.

In Fig. 10, a block diagram illustrating the policing method for the parameters according to the invention is shown.

With reference to this Figure, the HTU unit is schematized as including an IN input and an OUT output for the cells, an HP block on the path of the input cells and fit to discriminate the priority (if any), a switch S for the routing or the elimination of the cell and a CTRL control device which supervises the operation of the unit.

The arrangement foresees a first controlling or policing unit, indicated with the reference P1, for the lower priority cells, and a second controlling or policing unit, P2, for the higher priority cells H, and a combinatorial network RCG.

The unit P2 is able to control at least one parameter of the higher priority cells, for instance, the peak bit rate, Rp. If it is necessary the unit may also verify other parameters, for instance the mean bit rate, Rm and in this case the P2 unit would correspond to the whole of the units PU3 and PU4 in Fig. 8.

In the same way, the P1 unit is able to control at least one parameter of the lower priority cells, for instance, the peak bit rate, Rp. If it is necessary, the unit may also verify other parameters, for instance the mean bit rate, Rm, and in this case the P1 unit would correspond to the whole of the units PU1 and PU2 in Fig. 8.

The P1 and P2 units are activated in parallel by the control block CTRL and receive at the same time the priority information from the HP block. In the diagram of Fig. 10, the illustrated connections may correspond to two or more physical lines, or in general, they may be realized by means of busses. For instance, the activation of each unit may include two signals, of the same type of the Start-Pol and SP-Val signals in Fig. 8.

The outputs of the two units are connected to the combinatorial network RCG which processes such outputs and produces three types of outputs, one D output controlling the switch S to discard or to address the cell, and the compliance outputs, UP1 and UP2, respectively, for the units P1 and P2, respectively. In particular and also with reference to the Fig. 8, the value of the compliance signal, Ext-POK2, determines whether or not the policing counter of the policing unit has to be increased during the next execution cycle of the policing algorithm on a cell pertaining to the same VC/VP. When a high priority cell violates the contracted traffic parameters, the signal D indicates to the HTU if that cell may be addressed with a lower priority (CLP=1).

In other words, the method for the policing of the traffic parameters according to the invention foresees:

- the contemporaneous enabling of the controlling or policing unit P by means of the HTU header processing unit to analyze at least one traffic parameter of the ATM cell flow;

- the generation of a compliance signal UP for each of the said policing units P obtained by means of the coding RCG of the outputs of the said policing units P;
- the updating of the content of the counter of each policing unit Pat the moment of the next analysis relating to a cell pertaining to the same VC/VP, without increasing the value if the said compliance signal UP has been found to be active for the policing unit P.

It will be understood by those skilled in the art that various modifications and changes may be made to the present invention without departing from the scope thereof. For example a modification may be made controlling separately the higher priority sub-flow and the aggregated flow obtained adding the higher priority sub-flow HPS to the lower priority sub-flow LPS. In this case in fig. 3 and 4 - and consequently in fig 7 and 8 - the unit/s PU able to control the peak bit rate Rp1 and the mean bit rate Rm1 of the lower priority sub-flow are connected to the exit of the selecting means.

## Claims

1. Arrangement of a plurality of policing units for the policing of the traffic parameters of the Asynchronous Transfer Mode (ATM) connections (VC/VP) cell flow according to the so called "Leaky Bucket" principle and particularly in a telecommunication apparatus (ET) including a header processing unit (HTU) and several controlling or policing units (PU), said arrangement including
   at least a first and a second simultaneously operating policing units (PU1, PU2) able to monitor the peak bit rate (Rp) and the mean bit rate (Rm), respectively, an output of each of said policing units (PU1, PU2) being connected to a combinatorial network (RC) generating a control signal of the cell flow traffic,
   characterized in that each of said policing units (PU) has activation input (Start-Pol, SP-Val) connected to the said header processing unit (HTU) and two output lines (End-Pol, Pol-OK) both connected to said combinatorial network (RC), the output lines (End-Pol1, Pol-OK1) of the first policing unit (PU1) being further connected to a same number of inputs (Ext-End- Pol2, Ext-POK2) of said second policing unit (PU2),
   and in that said combinatorial network (RC) has two output lines connected to the said header processing unit (HTU), one of such lines carrying a signal (G1b-POK) that is representative of a detection of a violation by at least one of said policing units (PU) while the other of such lines carries a validating signal (G1b-End-Pol).

2. Arrangement according to claim 1, characterized in that said policing units (PU) have the same construction and can operate in one of two operating modes, the said first unit (PU1) being set to operate in Single Mode (SM) and said second unit (PU2) being set to operate in Parallel Mode (PM).

3. Arrangement according to claim 2, characterized in that another input of the said policing units (PU1, PU2) is connected to another output (CLP-F) of the said header processing unit (HTU) indicating the cell priority.

4. Arrangement according to claim 1, characterized by the fact to include in addition:

   - a third and a fourth policing unit (PU3, PU4), having the activation inputs (Start-Pol-HP, SP-Val) connected in parallel to the said header processing unit (HTU), the said units being activated according to a priority code (CLP) associated to the cells;
   - a combinatorial network (RC) connected to the outputs (End-Pol, Pol-OK) of the said policing units (PU1, PU2, PU3, PU4) and to the said additional output (CLP-F) of the said header processing unit (HTU), the outputs of the said combinatorial network being connected to the said header processing unit (HTU) as well as to the input of the said first and second policing unit (PU1, PU2).

5. Arrangement according to claim 4, characterized in that the said first unit, second unit and fourth unit (PU1, PU2, PU4) are ready to operate in Parallel Mode (PM) and the said third unit (PU3) is ready to operate in Single Mode (SM); and that the outputs (End-Pol3, Pol-OK3) of the said third unit (PU3) are connected at the same time to the same number of inputs (Ext-End-Pol4, Ext-POK4) of the said fourth unit (PU4) and to the combinatorial network (RC), and that the outputs (End-Pol4, Pol-OK4) of the said fourth unit (PU4) are connected to the said combinatorial network (RC).

6. Method for the policing of the traffic parameters of the cell flow of the connection (VC/VP) active at the same time on an Asynchronous Transfer Mode (ATM) link according to the so called "Leaky Bucket" principle in an exchange termination (ET) including

   a header processing unit (HTU)
   and at least two units (PU) for the policing of the respect of the predetermined values of the said parameters, each of said policing unit (PU) including a counter (CN) for each flow to be controlled,

said method enabling at the same time said policing units (PU) in order to analyze at least one traffic parameter of the ATM cell flow, and generating a control signal in response to assessment signals generated by said policing units (PU) upon receiving said cell flow;

characterized in that the method further comprises the steps of:

- generating, for each of the said policing units (PU), a compliance signal (Ext-POK) as a combination (RC) of the outputs of the said policing units (PU) and in case of a cell field (CLP) which identifies the cell priority, the said compliance signal being active in presence of the violation of at least one fixed traffic parameter;
- updating the content of the said counter (CN) of each policing unit (PU) at the moment of the next analysis relating to a cell pertaining to the same connection (VC/VP) without increasing the value of the same counter (CN), if the said compliance signal has been found to be active for the policing unit (PU) in question.

7. Method according to claim 6, characterized in that the said parameter for one of the policing units is the peak bit rate (Rp).

8. Method according to claim 6, characterized in that the said parameter for one of the policing units is the mean bit rate (Rm).

9. Method according to claim 7 or 8, characterized in that one of the said units (PU) monitors the high priority cells.

**Patentansprüche**

1. Anordnung einer Mehrzahl von Verwaltungseinheiten zur Verkehrsparameterverwaltung des Zellflusses in ATM-Verbindungen (VC/VP) nach dem so genannten "Leaky Bucket"-Prinzip und speziell in einem Telekommunikationsapparat (ET), der eine Header-Prozessoreinheit (HTU) und mehrere Steuer- oder Verwaltungseinheiten (PU) einschließt, wobei die genannte Anordnung folgendes einschließt:
mindestens eine erste und eine zweite simultan arbeitende Verwaltungseinheit (PU1, PU2), die geeignet sind, die höchste Bitfolge (Rp) beziehungsweise die mittlere Bitfolge (Rm) zu überwachen, wobei ein Ausgang jeder der genannten Verwaltungseinheiten (PU1, PU2) mit einem kombinatorischen Netzwerk (RC) verbunden ist, welches ein Steuersignal des Zellverkehrsflusses erzeugt,
dadurch charakterisiert, daß jede der genannten Verwaltungseinheiten (PU) den Aktivierungseingang (Start-Pol, SP-Val) mit der genannten Header-Prozessoreinheit (HTU) verbunden hat und zwei Ausgangsleitungen (End-Pol, Pol-OK), die beide mit dem genannten kombinatorischen Netzwerk (RC) verbunden sind, wobei die Ausgangsleitungen (End-Pol1, Pol-OK1) der ersten Verwaltungseinheit (PU1) weiter mit einer gleichen Anzahl von Eingängen (Ext-End- Pol2, Ext-POK2) der genannten zweiten Verwaltungseinheit (PU2) verbunden sind,
und dadurch, daß das genannte kombinatorische Netzwerk (RC) zwei Ausgangsleitungen hat, die mit der genannten Header-Prozessoreinheit (HTU) verbunden sind, wobei eine dieser Leitungen ein Signal (G1b-POK) transportiert, das die Identifizierung einer Störung durch mindestens eine der genannten Verwaltungseinheiten (PU) darstellt, während die andere dieser Leitungen ein Bestätigungssignal (G1b-End-Pol) transportiert.

2. Anordnung nach Anspruch 1, dadurch gekennzeichnet, daß die genannten Verwaltungseinheiten (PU) den gleichen Aufbau haben und in einem der zwei Betriebsarten funktionieren können, die genannte erste Einheit (PU1) ist für den Einmodenbetrieb (SM) und die genannte zweite Einheit (PU2) für den Parallelmodenbetrieb (PM) bestimmt.

3. Anordnung nach Anspruch 2, dadurch gekennzeichnet, daß ein anderer Eingang der genannten Verwaltungseinheiten (PU1, PU2) mit einem anderen Eingang (CLP-F) der genannten Header-Prozessoreinheit (HTU) verbunden ist, welcher die Zellpriorität anzeigt.

4. Anordnung nach Anspruch 1, dadurch gekennzeichnet, daß sie zusätzlich folgendes einschließt:

- eine dritte und vierte Verwaltungseinheit (PU3, PU4) mit den Aktivierungseingänge (Start-Pol-HP, SP-Val) parallel verbunden mit der genannten Header-Prozessoreinheit (HTU), wobei die genannten Einheiten entsprechend einem mit den Zellen assoziierten Prioritätencode (CLP) aktiviert werden;
- ein kombinatorisches Netzwerk (RC), das mit den Ausgängen (End-Pol, Pol-OK) der genannten Verwaltungseinheiten (PU1, PU2, PU3, PU4) und mit dem genannten zusätzlichen Ausgang (CLP-F) der genannten Header-Prozessoreinheit (HTU) verbunden ist, wobei die Ausgänge des genannten kombinatorischen Netzwerkes mit der genannten Header-Prozessoreinheit (HTU) sowie mit dem Eingang der genannten ersten und zweiten Verwaltungseinheit (PU1, PU2) verbunden sind.

**5.** Anordnung nach Anspruch 4, dadurch gekennzeichnet, daß die genannte Einheit eins, zwei und vier (PU1, PU2, PU4) bereit sind, im Parallelmodenbetrieb (PM) und die genannte dritte Einheit im Einmodenbetrieb (SM) zu operieren; und daß die Ausgänge (End-Pol3, Pol-OK3) der genannten dritten Einheit (PU3) gleichzeitig mit der gleichen Anzahl von Eingängen (Ext-EWnd-Pol4, Etx-POK4) der genannten vierten Einheit (PU4) und dem kombinatorischen Netzwerk (RC) verbunden sind, und daß die Ausgänge (End-Pol4, Pol-OK4) der genannten vierten Einheit (PU4) mit dem genannten kombinatorischen Netzwerk (RC) verbunden sind.

**6.** Verfahren für die Verwaltung der Verkehrsparameter der gleichzeitig in einer ATM-Leitung aktiven Zellflußverbindung (VC/VP) entsprechend dem sogenannten "Leaky Bucket"-Prinzips in einer Netzendstelle (ET), die folgendes einschließt:

eine Header-Prozessoreinheit (HTU) und mindestens zwei Einheiten (PU) zur Überprüfung der Wahrung der vorab bestimmten Werte der genannten Parameter, wobei jede Verwaltungseinheit (PU) einen Zähler (CN) für jeden zu kontrollierenden Fluß einschließt, gleichzeitig macht das genannte Verfahren es den genannten Verwaltungseinheiten (PU) möglich, mindestens ein Verkehrsparameter des ATM-Zellflusses zu analysieren, und es erzeugt ein Steuersignal als Antwort auf Bewertungssignale, die von den genannten Verwaltungseinheiten (PU) nach Empfang des genannten Zellflusses erzeugt werden;

dadurch gekennzeichnet, daß das Verfahren weiter die folgenden Phasen einschließt:

- Erzeugung für jede der genannten Verwaltungseinheiten (PU) eines Erfüllungssignals (Ext-POK) als eine Kombination (RC) der Ausgänge der genannten Verwaltungseinheiten (PU) und im Fall eines Zellfelds (CLP), das die Zellpriorität identifiziert, ist das genannte Erfüllungssignal aktiv bei Vorhandensein einer Verletzung von mindestens einem fixierten Verkehrsparameter;
- den Inhalt des genannten Zählers (CN) einer jeden Verwaltungseinheit (PU) auf den neuesten Stand bringen, und zwar zum Zeitpunkt der nächstfolgenden Analyse betreffs einer Zelle, die zur gleichen Verbindung gehört (VC/VP), ohne den Wert des Zählers (CN) selbst zu erhöhen, wenn sich das genannte Erfüllungssignal für die betreffende Verwaltungseinheit (PU) als aktiv erweist.

**7.** Verfahren nach Anspruch 6, dadurch gekennzeichnet, daß der genannte Parameter für eine der Verwaltungseinheiten die maximale Bitfolge (Rp) ist.

**8.** Verfahren nach Anspruch 6, dadurch gekennzeichnet, daß der genannte Parameter für eine der Verwaltungseinheiten die durchschnittliche Bitfolge (Rm) ist.

**9.** Verfahren nach Anspruch 7 oder 8, dadurch gekennzeichnet, daß eine der genannten Einheiten (PU) die Zellen mit hoher Priorität prüft.

**Revendications**

**1.** Dispositif comprenant une pluralité d'unités de commande pour la commande des paramètres de circulation de cellules de données dans les connexions (VC/VP) en mode de transfert asynchrone (ATM) selon le principe dît "Leaky Bucket", et en particulier dans un appareil de télécommunications (ET) comprenant une unité de traitement d'en-tête (HTU) et plusieurs unité de contrôle ou de commande (PU), le dît dispositif comprend:
au moins une première et deuxième unité de commande (PU1, PU2), qui fonctionnent de manière simultanée et qui sont aptes à contrôler respectivement la vitesse de bit maximum (Rp) et la vitesse de bit moyenne (Rm), une sortie de chacune des dîtes unités de commande (PU1, PU2) étant reliée à un réseau combinatoire (RC) générant un signal de contrôle de la circulation des cellules de données,
caractérisé en ce que chacune des dîtes unités de commande (PU) ayant les entrées d'activation (Start-Pol, SP-Val) reliées à la dite unité de traitement de l'en-tête (HTU) et deux lignes de sortie (End-Pol, Pol-OK) toutes les deux reliées au dît réseau combinatoire (RC), les lignes de sortie (End-Pol1, OK1) de la première unité de commande (PU1) étant en plus reliées au même nombre d'entrées (Ext-End- Pol2, Ext-PIK2) de la dite deuxième unité de commande (PU2),
et en ce que le dît réseau combinatoire (RC) a deux lignes de sortie reliées à la dite unité de traitement d'en-tête (HTU), une de ces lignes transporte un signal (G1b-POK), qui représente la détection d'une violation par au moins une des dîtes unités de commande (PU), pendant que l'autre de ces lignes transporte un signal de validation (G1b-End-Pol).

**2.** Dispositif selon la revendication 1, caractérisé en ce que les dites unités de commande (PU) ont la même construction et peuvent fonctionner à un de deux modes de fonctionnement, la dite première unité (PU1) étant préparée pour fonctionner à mode unique (SM) et la dite deuxième unité (PU2) étant préparée pour fonctionner à mode parallèle (PM).

3. Dispositif selon la revendication 2, caractérisée en ce qu'une autre entrée des dites unités de commande (PU1, PU2) est reliée à une autre sortie (CLP-F) de la dite unité de traitement d'en-tête (HTU), qui indique la priorité de cellule.

4. Dispositif selon la revendication 1, caractérisé en ce qu'il comprend en plus:

   - une troisième et quatrième unité de commande (PU3, PU4) avec les entrées d'activation (Start-Pol-HP, SP-Val) reliées en parallèle à la dite unité de traitement d'en-tête (HTU), les dites unités étant activées selon un code de priorité (CLP) associé aux cellules de données;
   - un réseau combinatoire (RC) relié aux sorties (End-Pol, Pol-OK) des dites unités de commande (PU1, PU2, PU3, PU4) et à la dite sortie supplémentaire (CLP-F) de la dite unité de traitement d'en-tête (HTU) et aussi à l'entrée de la dite première et deuxième unité de commande (PU1, PU2).

5. Dispositif selon la revendication 4, caractérisé en ce que la dite première, deuxième et quatrième unité (PU1, PU2, PU4) sont préparées pour fonctionner à mode parallèle (PM) et la dite troisième unité (PU3) est préparée pour fonctionner à mode unique (SM); et en ce que les sorties (End-Pol3, Pol-OK3) de la dite troisième unité (PU3) sont reliées en même temps au même nombre d'entrées (Ext-End-Pol4, Pol-OK4) de la dite quatrième unité (PU4) et au réseau combinatoire (RC), et que les sorties (End-Pol4, Pol-OK4) de la dite quatrième unité (PU4) sont reliées au dît réseau combinatoire (RC).

6. Procédé pour la commande des paramètres de circulation des cellules de données de la connexion (VC/VP) active en même temps dans le réseau de communication en mode de transfert asynchrone (ATM) selon le principe dît "Leaky -Bucket" dans une terminaison de centrale (ET), qui comprend

   une unité de traitement d'en-tête (HTU)
   et au moins deux unités (PU) pour le contrôle du respect des valeurs pré-établies des dits paramètres, chacune des dites unités (PU) comprend un conteur pour (CN) pour chaque circulation à contrôler,
   en même temps le dît procédé rend les dites unités de commande aptes à analyser au moins un paramètre de circulation du flux de cellules ATM et génère un signal de contrôle en réponse aux signaux d'évaluation générés par les dîtes unités de commande (PU) à réception le dît flux de cellules de données;

caractérisé en ce que le procédé comprend en plus les phases de

   - générer pour chacune des unités de commande (PU) un signal de compliance (Ext-POK) comme une combinaison (RC) des sorties des dites unités de commande (PU) et en cas d'un champ de cellules de données (CLP), qui identifié la priorité de cellule, le dît signal de compliance est actif en présence de la violation de au moins un paramètre de circulation fixé;
   - ajourner le contenu du dît conteur (CN) de chaque unité de commande (PU) au moment de l'analyse suivante relative à une cellule, qui appartient à la même connexion (VC/VP) sans augmenter la valeur du même conteur (CN), si le dît signal de compliance a été identifié d'être actif pour l'unité de commande (PU) en question.

7. Procédé selon la revendication 6, caractérisé en ce que le dît paramètre pour une des unités de commande est la vitesse de bit maximum (Rp).

8. Procédé selon la revendication 6, caractérisé en ce que le dît paramètre pour une des unités de commande est la vitesse de bit moyenne (Rm).

9. Procédé selon la revendication 7 ou 8, caractérisé en ce que une des dites unités (PU) contrôle les cellules de données de grande priorité.

Fig. 1

Fig. 2

Fig. 3

Fig. 4

Fig. 5

EP 0 614 586 B1

Fig. 6a

Fig. 6b

RC

Glb_End_Pol

Glb_POK

End_Pol1

Pol_OK1

End_Pol2

Pol_OK2

PU2

(PM)

M P U 2

HTU

M H T U

CLP_F

Start_Pol

SP_Val

PU1

(SM)

M P U 1

Fig. 7

Fig. 8

EP 0 614 586 B1

Fig. 9

Fig. 10